# DEMANDE DE BREVET EUROPEEN

(11) **EP 0 615 125 A1**
(43) Date de publication de la demande: **14.09.1994**
(21) Numéro de dépôt: 94420078.1
(22) Date de dépôt: 08.03.1994
(51) Int. Cl.: G01N 27/414

(54) **Capteur électrochimique intégré de mesure de pH et son procédé de fabrication**

(30) Priorité: 08.03.1993 FR 9302826
(71) Demandeur: IFREMER INSTITUT FRANCAIS DE RECHERCHE POUR L'EXPLOITATION DE LA MER, 92130 Issy-les-Moulineaux (FR)
(72) Inventeur: Birot, Dominique, F-29200 Brest (FR); Rocher, Valérie, F-69130 Ecully (FR); Jaffrezic, Nicole, F-69130 Ecully (FR); Chovelon, Jean-Marc, F-69130 Ecully (FR); Cros, Yves, F-38120 ST Egrève (FR); Fombon, Jean-Jacques, F-69330 Meyzieu (FR); Lemiti, Mustapha, F-69100 Villeurbanne (FR)
(74) Mandataire: Thibault, Jean-Marc

(57) **Abrégé**

- La présente invention concerne un capteur électrochimique solide et intégré, de mesure de pH, constitué par un transistor à effet de champ, dans lequel le drain et la source sont chacun relié à au moins un plot de connexion (**7₂**, **7₃**), à un circuit d'alimentation et de mesure, par l'intermédiaire d'au moins une piste conductrice (**6**), caractérisé en ce qu'il possède une forme générale allongée ; en ce que les plots de connexion (**7₂**, **7₃**) sont disposés dans une zone d'extrémité (**Z**) opposée à celle (**Z'**) contenant la source (**2**), le drain (**3**) et la grille (**4**) ; en ce qu'il est revêtu, à l'exception des plots de connexion et de la grille sélective, d'une couche extérieure de protection ; et en ce que la grille sélective est constituée par une membrane d'oxynitrure et/ou de nitrure de silicium, ayant une densité surfacique en sites Si - NH₂ comprise entre 2 et 8, de préférence entre 3 et 5 et, plus préférentiellement encore, de l'ordre de 4 micromoles x m⁻².
- L'invention concerne, également, un procédé de fabrication du susdit capteur.
- Application à la mesure de pH en milieu marin.

## Description

La présente invention est relative aux capteurs électrochimiques intégrés, de mesure de pH, constitués d'un transistor à effet de champ, dans lequel la grille métallique est remplacée par une grille sélective de l'ion **H**⁺ à doser et placée en contact avec la solution dont le pH est à mesurer.

De tels capteurs, dénommés communément ISFET (Ions Sensitive Field Effect Transistor), résultent de l'évolution ou du développement des propriétés des transistors à effet de champ. Ainsi, un capteur ISFET est constitué par un substrat semi-conducteur, par exemple au silicium, comportant :
- au moins une zone substrat dopée **p** ou **n**,
- au moins une zone dopée **n** ou **p**, dénommée source,
- au moins une zone dopée **n** ou **p**, dénommée drain,
- et au moins une grille sélective de l'ion H⁺.

La zone substrat est dopée **p**, dès lors que le drain et la source sont dopés **n** et inversement, sachant que cette dernière possibilité n'est, de loin, pas la préférée.

Le source et le drain sont séparés par une zone centrale ou canal et la grille est isolée du canal par une mince couche d'isolant.

Les interactions spécifiques, se produisant à l'interface grille sélective-solution, créent une variation du potentiel électrique qui se traduit par une variation du courant de drain. Cette dernière est fonction de la concentration en ion à doser dans la solution. La mesure de la variation du courant de drain, qui doit être préférentiellement linéaire et nernstienne, donne donc accès à la concentration en ion à doser.

Dans une première génération de capteurs ISFET de mesure de pH, la grille sélective est constituée par une membrane sensible aux ions H⁺, formée par une couche mince d'oxyde de silicium (SiO₂ silice). Ce type de membrane présente l'inconvénient d'avoir une faible durée de vie, en raison de son instabilité vis-à-vis de l'eau dont les effets d'hydratation altèrent les propriétés de détection de la membrane sensible.

En outre, il s'avère que ces membranes en silice ont des réponses non linéaires et subnernstiennes, ce qui les rend inadaptées à la mesure du pH.

Des oxydes d'aluminium (Al₂O₃) ou de tantale (Ta₂O₅), ou bien encore des nitrures de silicium (Si₃N₄), ont été également expérimentés à titre de matériaux constitutifs de ces membranes de détection des ions H⁺ dans une seconde génération de capteurs ISFET. Même si ces matériaux donnent à peu près satisfaction en ce qui concerne leur réponse nernstienne aux ions H⁺, ils présentent l'inconvénient majeur de ne pas pouvoir servir de base à l'élaboration d'électrodes de référence, dénommées communément REFET (Reference Electrode Field Effect Transistor).

Or, on sait que l'association d'une électrode de référence REFET à une électrode de mesure (ISFET), selon un montage différentiel intégrant une structure sensible aux ions H⁺ et une structure insensible aux ions H⁺, est une nécessité pour les mesures à l'aide de ces capteurs ISFET. Un tel montage différentiel permet, notamment, de minimiser l'influence néfaste de la température ou de la lumière.

Par conséquent, l'impossibilité d'insensibiliser les membranes Al₂O₃, Ta₂O₅, Si₃N₄ connues, par greffage d'un groupement inerte du type alkylsilane ou chloroalkylsilane, constitue un handicap rédhibitoire au développement de ces matériaux dans les grilles sélectives de capteurs ISFET.

Hormis ce problème de membrane sensible, les capteurs ISFET de l'art antérieur ont une structure générale telle qu'ils résistent mal aux contraintes mécaniques, physiques et chimiques auxquelles ils sont soumis dans des conditions d'utilisation et se détériorent donc très rapidement, par rapport aux électrodes électrochimiques traditionnelles. Ceci est dû, en particulier, au fait que les connexions, entre les zones drain, source et substrat (de préférence **p**) du transistor et le circuit extérieur d'alimentation et de mesure, sont très rapprochées de la grille sélective destinée à être en contact avec la solution, dont le pH est à mesurer.

Ces connexions sont donc, elles aussi, exposées à la solution à doser, qui peut être parfois agressive sur le plan chimique et entraîner des altérations.

Ce problème d'exposition aux agressions de la solution est d'autant plus critique que ces connexions sont conçues de telle sorte qu'elles sont relativement fragiles. Cette fragilité est due, principalement, aux défauts apparaissant lors de l'encapsulation du capteur. En effet, il est prévu, d'une manière habituelle, de monter sur un support le substrat formant le capteur et de relier les zones du transistor par des fils de connexion à des pistes conductrices, ménagées sur le support. Ces pistes conductrices présentent des connexions au circuit extérieur d'alimentation et de mesure. L'ensemble capteur-connexions-support est revêtu manuellement d'un matériau de protection. La structure ainsi réalisée comporte, inévitablement, des défauts d'enrobage et de liaison électrique au niveau des fils de contact entre le capteur intégré et les pistes du support, ces fils de contact étant disposés dans la zone d'immersion du capteur.

Le problème du choix d'un matériau approprié pour les membranes sensibles de grilles sélectives de capteurs ISFET de pH, a été résolu par le procédé décrit dans l'article intitulé "Sensitization of dielectric surfaces by chemical grafting : application to pH ISFETs and REFETs" paru dans SENSORS AND ACTUATORS B, 8 (1992) 221-225.

Ce procédé connu consiste à déposer une membrane d'oxynitrure de silicium par dépôt chimique en phase vapeur assistée par plasma, sur un support de test.

L'oxynitrure de silicium ainsi déposé peut être soumis à un greffage de radicaux alkylsilanes sur ces sites NH₂, de manière à insensibiliser la membrane au pH.

Les membranes ainsi réalisées présentent des réponses au pH linéaires et nernstiennes, ainsi qu'une durée de vie nettement allongée par rapport à celles des membranes en silice sensibles aux ions H⁺ de l'art antérieur.

Cependant, les supports de tests, décrits dans cet article antérieur, ne sauraient nullement être considérés comme des capteurs de pH élaborés au sens strict. Ces supports de test possèdent une structure générale rudimentaire, du type isolant-semi-conducteur. Ils ne pourraient pas être appliqués en pratique pour la mesure du pH, notamment parce qu'ils nécessitent un équipement technique d'assistance de mesure très sophistiqué et donc incompatible avec un environnement traditionnel. De plus, ces supports de tests sont pratiquement à usage unique car ils ne sont pas conçus pour être solides et résistants.

Dans cet état de fait, la présente invention vise à fournir un capteur électrochimique intégré, du type ISFET ou REFET pour la mesure de pH, comprenant une grille sélective réalisée dans un matériau sensible aux ions H⁺, résistant et transformable en un matériau insensible aux ions H⁺, d'une part, et ayant une structure générale faiblement altérable dans le temps et adaptée à une utilisation en tant que capteur électrochimique de pH, d'autre part.

A cet effet, la présente invention propose un capteur électrochimique solide et intégré, de mesure de pH, constitué par un transistor à effet de champ, du type comprenant un substrat semi-conducteur comportant :
- au moins une zone substrat dopée **p** ou **n**,
- au moins une zone dopée **n** ou **p**, dénommée source,
- au moins une zone dopée **n** ou **p**, dénommée drain,
- et au moins une grille sélective de l'ion H⁺,
   la source et le drain étant chacun relié à au moins un plot de connexion, à un circuit d'alimentation et de mesure, par l'intermédiaire d'au moins une piste conductrice, caractérisé :
   - en ce qu'il possède une forme générale allongée,
   - en ce que les plots de connexion sont disposés dans une zone d'extrémité opposée à celle contenant le drain, la source et la grille,
   - en ce qu'il est revêtu, à l'exception des plots de connexion et de la grille sélective, d'une couche extérieure de protection,
   - et en ce que la grille sélective est constituée par une membrane d'oxynitrure et/ou de nitrure de silicium ayant une densité surfacique en sites Si - NH₂ comprise entre 2 et 8, de préférence entre 3 et 5 et, plus préférentiellement encore, de l'ordre de 4 micromoles x m⁻².

L'invention a également pour objet un procédé de fabrication d'un capteur électrochimique solide et intégré, de mesure de pH, du genre constitué par un transistor à effet de champ, du type comprenant un substrat au silicium comportant:
- au moins une zone substrat dopée **p** ou **n**,
- au moins une zone dopée **n** ou **p**, dénommée source,
- au moins une zone dopée **n** ou **p**, dénommée drain,
- et au moins une grille sélective de l'ion H⁺,
   la source et le drain et éventuellement la zone substrat étant chacun relié à au moins un plot de connexion à un circuit d'alimentation et de mesure, par l'intermédiaire d'au moins une piste conductrice, caractérisé en ce qu'il consiste, essentiellement, à:
   - réaliser un substrat de forme générale allongée,
   - ménager sur le substrat des plots de connexion dans une zone d'extrémité opposée à celle comprenant le drain, la source et la grille,
   - réaliser des pistes conductrices entre les plots de connexion et les zones source et drain et, éventuellement, la zone substrat,
   - revêtir le capteur ainsi obtenu, à l'exception des plots de connexion et de la grille d'une couche de protection,
   - et, avant ou après la phase de revêtement, déposer sur la partie du substrat prévue pour former la grille sélective, une membrane d'oxynitrure et/ou de nitrure de silicium par dépôt chimique en phase vapeur.

Diverses autres caractéristiques ressortent de la description faite ci-dessous en référence aux dessins annexés qui donnent, à titre d'exemples non limitatifs, une forme de réalisation du capteur selon l'invention, ainsi qu'un mode de mise en oeuvre du procédé également objet de l'invention.

La **fig. 1** est une vue de dessus d'un capteur électrochimique intégré conforme à l'invention.

Les **fig. 2A, 2B** et **2C** sont des coupes tranversales prises sensiblement et respectivement selon les lignes **I-I**, **II-II** et **III-III**, représentant le capteur en fin de fabrication.

Les **fig. 3A à 3C** et **3D-3E** sont des coupes transversales prises sensiblement et respectivement selon les lignes **I-I** et **II-II** de la **fig. 1**.

Les **fig. 4A à 4F** montrent des exemples de réalisation de masques de photogravures utilisés dans le processus de fabrication du capteur selon l'invention.

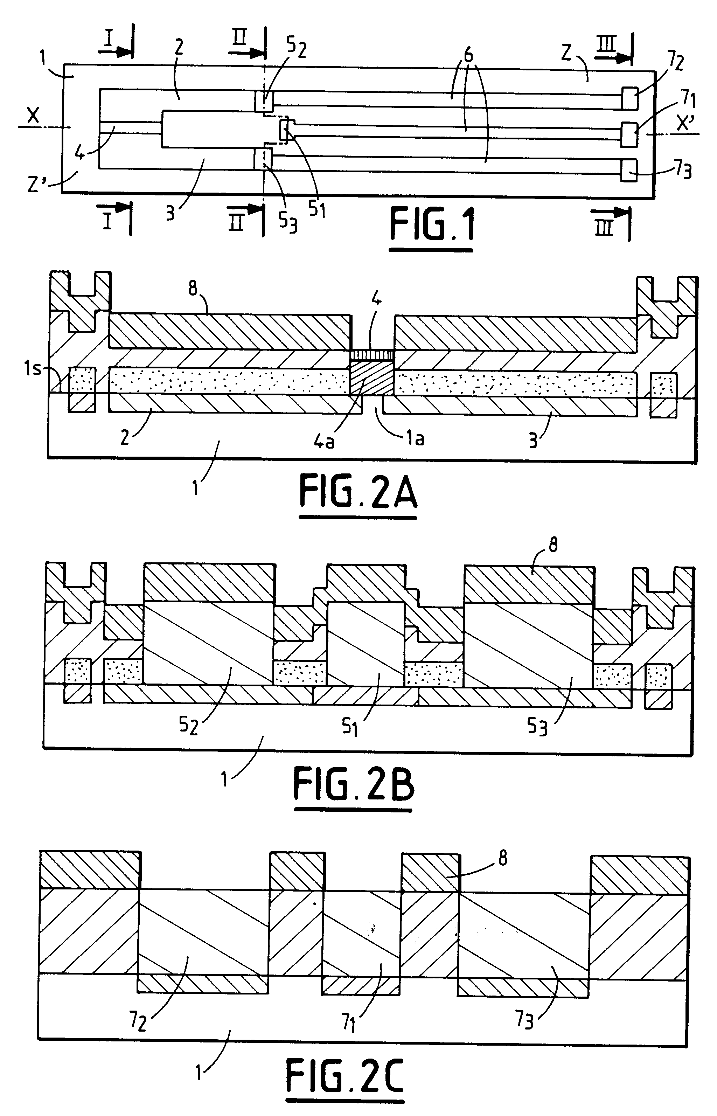

Les **fig. 1** et **2A à 2C** illustrent un capteur électrochimique intégré comprenant un substrat **1** réalisé en un matériau semi-conducteur dopé **p**, tel que le silicium, et présentant, selon une caractéristique de l'invention, une forme générale allongée selon une direction générale **x-x'**. Le substrat **1** comporte, à partir de l'une de ses faces, deux zones dopées **n** **2** et **3** constituant, respectivement, une source et un drain d'un transistor à effet de champ. Les zones de source **2** et de drain **3** délimitent une zone centrale ou canal **1a** appartenant à la zone substrat dopée **p** formée par le substrat **1** et au-dessus de laquelle est disposée une grille **4** isolée des zones de source **2** et de drain **3** par l'intermédiaire d'une couche d'un matériau diélectrique isolant désigné par la référence **4a**.

Selon l'une des caractéristiques essentielles de l'invention, la grille **4** est constituée par une membrane sensible aux ions H⁺, à base d'oxynitrure de silicium de formule générale (SiOₓN_{y}H_{z}), x, y et z étant choisis de telle sorte que 2x + 3y + z = 4, avec x compris entre 0 et 2, y compris entre 0 et 1,33 et z entre 0 et 4, et que la densité surfacique en sites Si - NH₂ de la membrane d'oxynitrure de silicium soit compris entre 2 et 8, de préférence entre 3 et 5 et, plus préférentiellement encore, soit de l'ordre de 4 micromoles x m⁻². Ce capteur constitue ainsi un ISFET de mesure du pH.

Conformément à une variante de réalisation de l'invention, la membrane **4** en oxynitrure de silicium est greffée par des hydroxylalkylsilanes en C₁₈, qui réagissent avec les groupements NH₂ présents à la surface de la membrane.

Ces greffons, qui sont, par exemple, des alkylsiloxanes ou des halogénoalkylsiloxanes de C₁ à C₃₀, permettent d'insensibiliser la membrane **4** aux ions H⁺ et d'obtenir ainsi un dispositif de référence de type REFET.

Selon une caractéristique de l'invention, les zones de source **2** et de drain **3** sont associées, respectivement, à des prises de contact électrique **5₂**, **5₃** ménagées dans le substrat **1**. Les prises de contact électrique de source **5₂** et de drain **5₃** sont reliées, par des pistes conductrices **6** ménagées dans le substrat **1**, à des plots de connexion, respectivement de source **7₂** et de drain **7₃**. Le capteur selon l'invention comporte, également, un plot de connexion **7₁** du substrat **1** (zone substrat **p** du capteur), dans une région d'extrémité **Z** du capteur regroupant, également, les plots de connexion de source **7₂** et de drain **7₃**. De préférence, les plots de connexion **7₁-7₃** sont réalisés selon une même section droite transversale perpendiculaire à la direction **x-x'** et située à proximité de l'une des extrémités du capteur. Ils permettent de relier la source, le drain et la zone **p** du substrat **1** à un circuit extérieur d'alimentation et de mesure.

Le plot de connexion **7₁** peut se trouver en liaison électrique directe avec le substrat ou, comme illustré sur la **fig. 1**, être relié par une piste conductrice **6** à une prise de contact électrique **5₁**ménagée au niveau de la section transversale du substrat comportant les prises de contact **5₂** et **5₃**.

Selon une caractéristique de l'invention, les plots de connexion **7₁** **à** **7₃** sont situés dans une région d'extrémité **Z** du capteur, à l'opposé de l'autre région d'extrémité **Z'** du capteur regroupant la zone source **2**, la zone drain **3** et la zone grille **4** du transistor. La forme allongée du capteur est ainsi mise à profit, afin d'écarter ou d'éloigner, selon un intervalle donné, les plots de connexion **7₁** **à** **7₃** de notamment la grille **4**. Selon une caractéristique de l'invention, le capteur ainsi constitué est recouvert, à l'exception des plots de connexion **7₁** **à 7₃** (**fig. 2C**) et de la zone grille **4** (**fig. 2A**), par une couche de protection **8** permettant l'encapsulation du capteur. Selon une variante de réalisation préférée, la couche de protection **8** est formée par un dépôt de silice assurant une passivation du capteur.

Le capteur selon l'invention est réalisé à partir d'un substrat semiconducteur comportant, d'un côté, un transistor à effet de champ et, du côté opposé, des plots de connexion à un circuit électronique extérieur. L'éloignement ainsi réalisé, entre la grille **4** et les plots de connexion **7₁** **à 7₃**, permet d'immerger, dans le milieu liquide à analyser, la région **Z'** du capteur, afin que la grille **4** se trouve en contact avec la solution à analyser, tout en permettant que les plots de connexion **7₁** **à 7₃** ne se trouvent jamais en contact direct avec le milieu liquide. Bien entendu, l'éloignement des plots de connexion **7₁** **à 7₃**, par rapport à la grille **4**, est choisi en fonction de l'application visée. Il est à noter qu'il peut être prévu d'adapter, par tout moyen convenable, le capteur ainsi réalisé sur un support offrant une résistance mécanique suffisante pour son utilisation. Ainsi, il est possible de monter le substrat sur un circuit imprimé comportant des bandes conductrices de liaison, d'une part, au circuit électronique extérieur et, d'autre part, aux plots de connexion.

La description qui suit illustre un exemple de fabrication d'un capteur électrochimique intégré conforme à l'invention, réalisé selon la technologie C-Mos du type planar.

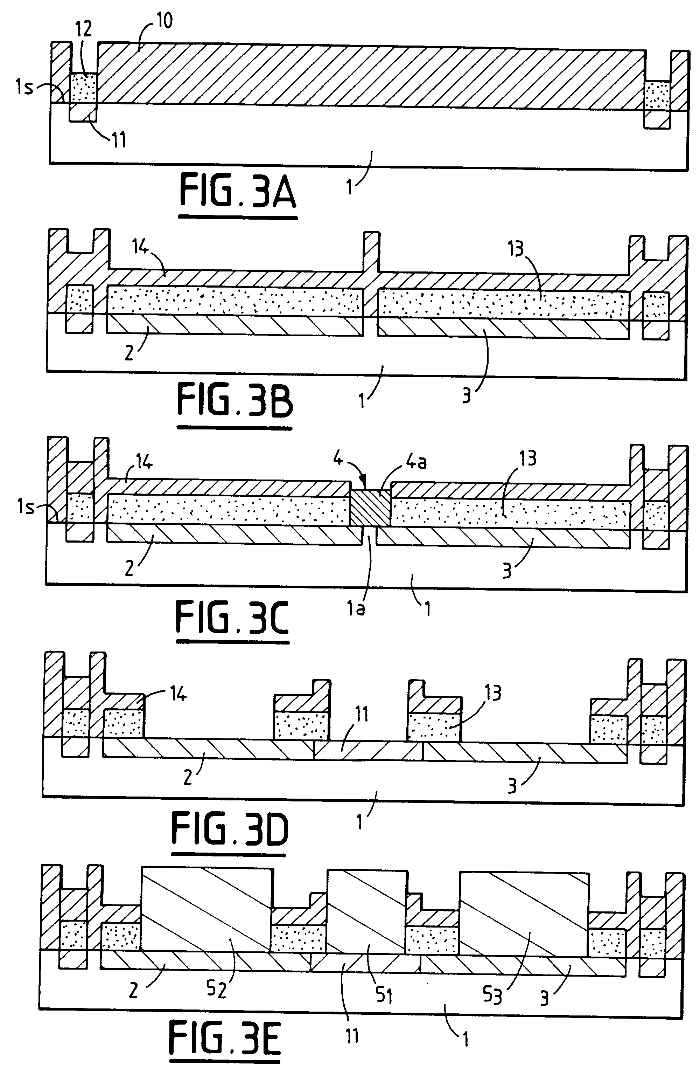

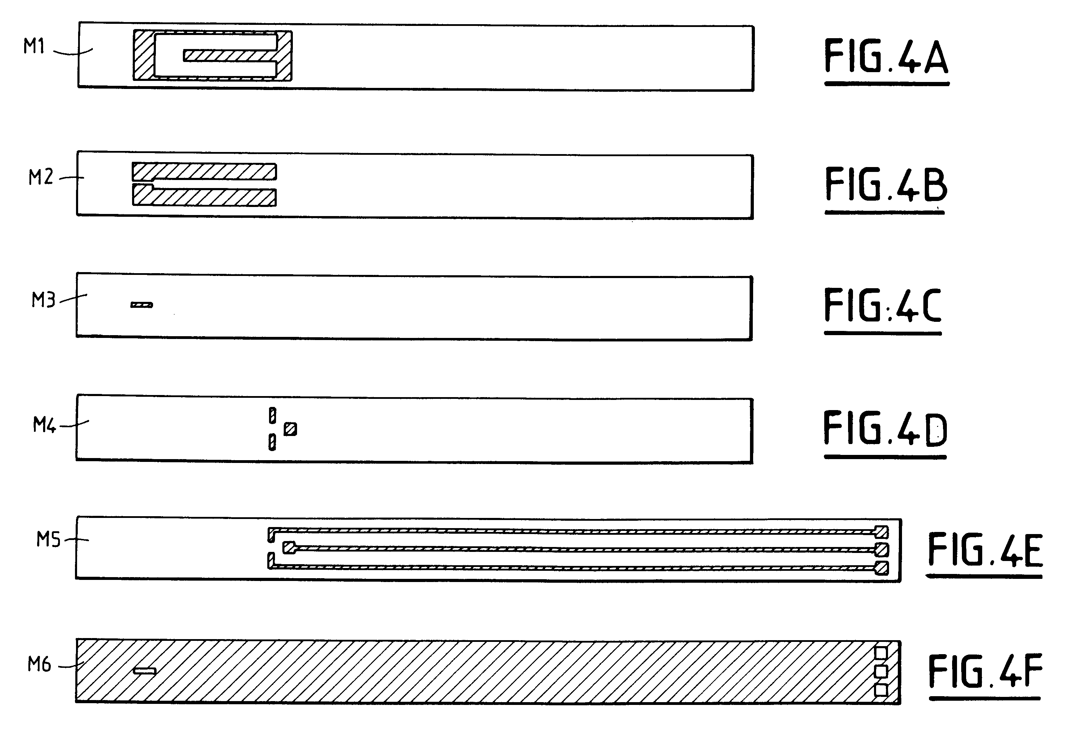

La **fig. 3A** illustre un substrat semi-conducteur **1**, tel que du silicium, présentant, sur une surface **1**_{**s**}, une couche d'oxydation **10** réalisée, par exemple, par oxydation thermique par voie humide à 1 050° C et présentant une épaisseur de 0,6 µm. Le procédé consiste, ensuite, à ouvrir des zones d'isolation **11** par une opération classique de photogravure de la couche **10** à l'aide du masque **M₁**, illustré à la **fig. 4A**, délimitant les contours du capteur. Il est ensuite procédé à une opération d'oxydation thermique par voie sèche donnant une couche de silice **12** d'épaisseur de l'ordre de 400 Å L'opération d'oxydation est suivie par une implantation de dopants, de type par exemple **p**⁺.

Le procédé consiste, ensuite, à réaliser l'implantation des zones de source **2** et de drain **3**. A cet effet, et tel que cela ressort de la **fig. 3B**, les opérations suivantes sont effectuées, à savoir, une oxydation thermique par voie humide à 1 050° C, permettant d'obtenir une couche de silice d'épaisseur de l'ordre de 0,4 µm, une opération de photogravure à l'aide du masque **M₂**, illustrée à la **fig. 4B**, afin d'ouvrir les zones drain et source, une oxydation thermique par voie sèche à 1 050° C, donnant une couche de silice **13** d'épaisseur de l'ordre de 400 Å, une implantation de dopants **n**⁺ dans les zones de drain et de source et une oxydation humide thermique à 1 050° C donnant une couche **14** de silice de l'ordre de 0,3 µm.

Le procédé de fabrication vise, ensuite, à réaliser la zone de grille **4**. Tel que cela apparaît à la **fig. 3C**, l'ouverture de la grille est réalisée par une opération de photogravure à l'aide du masque **M₃** illustré à la **fig. 4C**. Une oxydation sèche à 1 050° C est réalisée, afin de constituer la couche de silice **4a**, par exemple, d'épaisseur 0,1 µm dans la région médiane des zones de source **2** et de drain **3**.

Le procédé de fabrication selon l'invention prévoit, ensuite, de réaliser les prises de contact électrique **5₁** **à 5₃**, respectivement, sur le substrat **1** (zone **p** du capteur), la source **2** et le drain **3**. Tel que cela apparaît plus précisément à la **fig. 3D**, il est prévu d'assurer, par photogravure à l'aide d'un masque **M₄** (**fig.4D**) comportant le dessin des prises de contact, l'ouverture des contacts et une gravure localisée correspondante des couches de silice **13** et **14**. L'ouverture des contacts est réalisée, comme cela apparaît sur le masque **M₄**, en comparaison avec le masque **M₂**, selon une section droite transversale s'établissant dans la région d'extrémité des branches du "**U**" formant les zones de drain et de source.

Le procédé prévoit, ensuite, d'assurer un dépôt métallique, par exemple d'aluminium sous vide, d'épaisseur de l'ordre de 0,8 µm, et d'effectuer une gravure du métal (**fig. 3E**) par l'intermédiaire d'une opération de photogravure réalisée à partir d'un masque **M₅** (**fig. 4E**) qui reprend le dessin des prises de contact **5₁** à **5₃**, des pistes conductrices **6** et des plots de connexion **7₁** à **7₃**.

Le procédé selon l'invention vise, ensuite, à assurer le dépôt d'un matériau de protection **8** sur l'ensemble du capteur ainsi constitué, à l'exclusion des plots de connexion **7₁** à **7₃** et de la zone de grille **4** (phase de revêtement). A cet effet, il est prévu de réaliser un dépôt d'une couche de silice **8** à environ 430° C, selon une épaisseur de l'ordre de 0,4 µ. Il est prévu, ensuite, d'assurer, par photogravure à l'aide du masque **M₆** (**fig. 4F**), l'ouverture de la zone de grille **4** (**fig. 2A**) et des plots de connexion **7₁** à **7₃** (**fig. 2C**).

Le capteur ainsi réalisé est recouvert d'une couche de silice **8** sur la totalité de sa surface supérieure et, notamment, au niveau des prises de contact **5₁** à **5₃** (**fig. 2B**), à l'exclusion uniquement de la zone de grille **4** (**fig. 2A**) et des plots de connexion **7₁** à **7₃** (**fig. 2C**). Une telle couche de protection **8** permet d'assurer une encapsulation complète, dans la passivation du capteur par l'intermédiaire d'une silice thermique qui présente une totale imperméabilité à l'eau. L'enrobage du capteur, réalisé au cours de son procédé, permet d'assurer une encapsulation minimisant les risques de défaut et augmentant la durée de vie d'un tel capteur. L'encapsulation est également améliorée par la réalisation, directement sur le substrat, au cours du processus de fabrication du capteur, des prises de contact électrique, des pistes conductrices et de plots de connexion, permettant de s'affranchir de fils de connexion dans la zone d'immersion du capteur.

Une autre phase essentielle du procédé suivant l'invention est celle de l'obtention de la grille sélective aux ions H⁺, à base d'oxynitrure et/ou de nitrure de silicium.

Elle intervient, de préférence, après le dépôt de la couche de protection, mais pourrait éventuellement être effectuée avant.

Le capteur est, tout d'abord, revêtu d'un masque destiné à protéger les plots de connexion **7₁** à **7₃**, de façon à les soustraire au dépôt d'oxynitrure de silicium, qui est donc effectué sur la grille **4**, mais aussi sur le reste du capteur, à l'exception des plots **7₁** à **7₃**.

Ce dépôt fait appel à la technique connue de dépôt chimique en phase vapeur assisté, de préférence, par plasma. Il pourrait être envisagé de mettre en oeuvre toute autre forme d'assistance ou d'activation que le plasma, comme par exemple les ultra-violets.

Dans le cas d'une assistance par plasma, le capteur masqué est placé dans un réacteur du type de celui décrit dans la référence J. MICHAILOS and Y. CROS, "Influence of helium dilution on physicochemical and defect properties of PECVD silicon oxynitride film", Appl. Surf. Sci., 39 (1989) 16-24.

Les étapes suivantes sont alors mises en oeuvre :
- chauffage du capteur à une température comprise entre 300 et 450° C, de préférence entre 350 et 400° C et, plus préférentiellement encore, égale à 360° C environ,
- mise sous vide, au moins partiel, de l'enceinte réactionnelle, la pression totale étant, de préférence comprise entre 1 et 2 mbar et, plus préférentiellement encore, égale à 1,6 mbar environ,
- amenée d'un plasma comprenant au moins trois gaz réactionnels, de préférence trois, à savoir le silane (SiH₄), l'ammoniac (NH₃), le protoxyde d'azote (N₂O), dans l'enceinte réactionnelle, la puissance du plasma étant choisie entre 0,1 et 0,3, de préférence de l'ordre de 0,18 W x cm⁻²,
- formation d'une membrane d'oxynitrure de silicium présentant des sites Si - NH₂ à sa surface.

L'oxynitrure de silicium possède une formule générale du type (SiOₓN_{y}H_{z}), x, y et z étant choisis de telle sorte que la densité surfacique de SiNH₂ soit comprise entre 2 et 8, de préférence entre 3 et 5 et, plus préférentiellement encore, soit de l'ordre de 4 micromoles x m⁻².

Cet ajustement des variables x, y, z s'opère par l'intermédiaire des débits gazeux. Ainsi, le rapport R₁ = NO₂/(NH₃ + NO₂) est maintenu de manière à faire varier le rapport de la densité atomique en oxygène sur la somme des densités atomiques en oxygène et en azote (O/O+N) dans la couche d'oxynitrure de silicium. Il a été démontré que, lorsque ce rapport augmente, la densité de liaison NH/NH₂ diminue.

On peut donc contrôler, par ce biais, outre la densité des sites SiNH₂, celles des sites SiNH, SiOH et SiH.

Le rapport de débits gazeux R₂ = (N₂O + NH₃)/SiH₄ est, quant à lui, maintenu au-dessus de 10, pour éviter la formation de liaisons Si - Si.

Les débits utilisés sont, par exemple, les suivants :
- SiH₄ = 3 cm³ x mn⁻¹,
- N₂O = 60 cm³ x mn⁻¹,
- et NH₃ = 60 cm³ x mn⁻¹.

Avantageusement, on peut ajouter un gaz diluant dans le plasma. Il peut s'agir, par exemple, de l'hélium.

Un recuit est effectué à la suite du dépôt d'oxynitrure à 360° C sous atmosphère d'azote pendant 40 minutes.

On obtient ainsi un capteur ISFET pH (Si/SiO₂/SiOₓN_{y}H_{z}) dont la grille sélective présente une très bonne sensibilité aux ions H⁺ et possède une durée de vie relativement longue par rapport à celle des capteurs de l'art antérieur.

Selon une variante du dépôt chimique phase vapeur pour laquelle on a recours à une assistance ultraviolet, le capteur masqué est introduit dans un réacteur, qui peut être un sensibilisateur à mercure du type de celui décrit dans M. LEMITI, S. AUDISIO, J. C. DUPUY, B. BALLAND "Silicon nitrid films deposited by Hg-photosensitization chemical vapor deposition", Journal of non cristalline solids, vol. 144, année 1992, p. 261-268.

Le capteur est ensuite chauffé à une température comprise entre 100 et 300° C, de préférence entre 150 et 250° C et, plus préférentiellement encore, de l'ordre de 200° C.

L'enceinte réactionnelle est mise sous un vide, au moins partiel, de préférence compris entre 5 et 10 mbar et, plus préférentiellement encore, de l'ordre de 7 mbar et l'on amène à l'intérieur de l'enceinte un mélange gazeux d'au moins deux gaz réactionnels, de préférence deux : le silane (SiH₄) et l'ammoniac (NH₃).

Ce mélange gazeux est ensuite soumis à une irradiation UV, ce qui donne lieu à la formation d'une membrane de nitrure de silicium présentant des sites NH₂ à sa surface.

Une partie du silane, par exemple 3 %, est, de préférence, diluée dans un gaz inerte, tel que l'argon.

L'exemple qui suit illustre cette variante d'assistance du dépôt.

Le mélange gazeux de silane (3 % de SiH₄ est dilué avec de l'argon) et d'ammoniac pur (NH₃) est introduit dans la chambre de réaction d'un sensibilisateur à mercure qui contient le capteur masqué à traiter et dans laquelle règne une pression de 7 mbar et une température de 200° C environ.

Le rapport gazeux R₃ = SiH₄/NH₃ est choisi de telle sorte que la densité surfacique des sites SiNH₂ soit comprise entre 2 et 8, de préférence entre 3 et 5 et, plus préférentiellement encore, soit de l'ordre de 4 micromoles x m⁻². Dans cet exemple, R₃ = 1/80.

Un échangeur à mercure est placé directement à la sortie des gaz. Une fenêtre de silice, transparente à la lumière de longueur d'onde 253,7 nm, est placée entre la lampe à mercure et le capteur. La distance fenêtre/substrat est de 16 mm.

Au début de la réaction, l'échangeur à mercure est excité par des vibrations ultrasoniques. Puis, après la stabilisation du flux gazeux et la pression, la lampe à mercure est allumée et la réaction de dépôt commence.

Les atomes de mercure, présents dans le saturateur, sont excités par la raie de longueur d'onde 253,7 nm et transmettent leur énergie au mélange gazeux par collision, générant ainsi des radicaux servant au dépôt du nitrure de silicium. Ce dépôt est conduit pendant environ 8 minutes. Il est classiquement suivi d'un recuit du capteur, par exemple à 900° C pendant 20 secondes.

Ainsi, il se forme en surface des liaisons SiNH₂. Celles-ci permettent d'obtenir, d'une part, une réponse au pH nernstienne et, d'autre part, une certaine réactivité aux silanes. Il sera donc possible de greffer chimiquement, par exemple, un hydroxysilane C₁₈ sur ces liaisons SiNH₂ pour obtenir un ISFET de référence.

Des tests réalisés sur des capteurs selon l'invention, à l'aide d'un système de mesure simple ou différentiel, ont confirmé leur excellente sensibilité et leur longue durée de vie. Pour ces tests, le ou les ISFET sont connectés à un amplificateur. Le signal de sortie est mesuré à la source de l'ISFET par rapport à une électrode de référence au calomel en mesure simple et par rapport à une électrode de platine pour la mesure différentielle.

Les résultats ont permis d'établir que ces capteurs ont une sensibilité d'environ 57,4 mV ± 0,4 x pH⁻¹ avec une dérive de 1 mV x h⁻¹.

La figure ci-dessous illustre la réponse au pH d'un capteur ISFET oxynitrure de silicium.

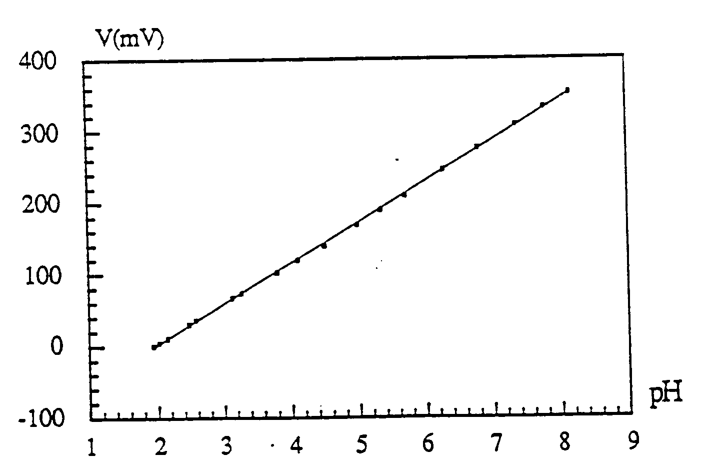

Cette sensibilité au pH est stable dans le temps, puisque après un mois et demi d'immersion dans l'eau elle est encore de 50 mV x pH⁻¹.

Un autre test a montré l'absence d'hystérésis (montée en pH, descente en pH) et a permis de conclure à la bonne accessibilité des sites de l'oxynitrure de silicium.

On a également montré que l'ion sodium interfère peu sur la réponse de l'ISFET pH puisque sa sensibilité est de 5 mV/pNa pour une concentration en ions sodium de 0,1 à 1 M (pNa : 1 à 0).

L'effet de la température a lui aussi été analysé. La sensibilité obtenue est de 1,4 mV/° C dans un intervalle de température situé entre 21 et 50° C.

Un autre avantage de ces nouveaux capteurs à grille sélective à base d'oxynitrure de silicium est leur aptitude à être transformés en capteur de référence (REFET).

Cette transformation s'effectue par greffage chimique covalent de radicaux hydroxyalkylsilane en C₁₈ sur les sites Si - NH₂ présents à la surface de la membrane d'oxynitrure de silicium et/ou de nitrure de silicium.

Le capteur, ayant subi le dépôt de SiOₓN_{y}H_{z}, est amené, sous atmosphère d'azote, dans une solution de silane.

L'hydroxyalkylsilane en C₁₈ employé est obtenu à partir de chloroalkylsilane, comme décrit dans la référence L. BOKSANY, O. LIARDON and E. Sz. KOVATS, Note of the preparation of alkyl- and oxoalkyl-dimethylsilanols, Helv. Chim. Acta, 59 (1976) 717-727.

La réaction de greffage s'opère à 140° C sous azote, pendant deux périodes de 48 h. Après greffage, le capteur est lavé à l'aide de tétrahydrofurane.

La réaction en cause est la suivante : 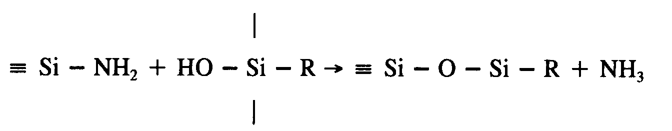
R = alkyle en C₁₈.

La sensibilité au pH du REFET ainsi obtenu est inférieure à celle de l'ISFET décrit ci-dessus. Cela permet d'effectuer des mesures différentielles de pH (15 à 35 mV x pH⁻¹) fiables et précises, avec une sensibilité de 22 à 42 mV x pH⁻¹.

L'association de ces deux capteurs ISFET-REFET selon l'invention constitue un système de mesure solide, résistant et de taille réduite. Un tel système est particulièrement bien adapté à la mesure du pH en milieu marin, étant donné qu'il est apte à résister aux fortes pressions des grandes profondeurs.

## Revendications

**1 -** Capteur électrochimique solide et intégré, de mesure de pH : constitué par un transistor à effet de champ, du type
* comprenant un substrat semi-conducteur comportant :
- au moins une zone substrat (**1**) dopée **p** ou **n**,
- au moins une zone dopée **n** ou **p**, dénommée source (**2**),
- au moins une zone dopée **n** ou **p**, dénommée drain (**3**),
- et au moins une grille (**4**) sélective de l'ion H⁺,
le drain et la source étant chacun relié à au moins un plot de connexion (**7₂**, **7₃**), à un circuit d'alimentation et de mesure, par l'intermédiaire d'au moins une piste conductrice (**6**),
* possèdant une forme générale allongée,
* et présentant des plots de connexion (**7₂**, **7₃**) sont disposés dans une zone d'extrémité (**Z**) opposée à celle (**Z'**) contenant la source (**2**), le drain (**3**) et la grille (**4**),
caractérisé :
- en ce qu'il est revêtu, à l'exception des plots de connexion et de la grille sélective, d'une couche extérieure de protection,
- et en ce que la grille sélective est constituée par une membrane d'oxynitrure et/ou de nitrure de silicium, ayant une densité surfacique en sites Si - NH₂ comprise entre 2 et 8, de préférence entre 3 et 5 et, plus préférentiellement encore, de l'ordre de 4 micromoles x m⁻².

**2 -** Capteur selon la revendication 1, caractérisé en ce que la zone du substrat (**1**) est également reliée à au moins un plot connexion (**7₁**) par l'intermédiaire d'une piste conductrice (**6**).

**3 -** Capteur selon la revendication 1, caractérisé en ce que la couche de protection est à base de silice thermique assurant la passivation du capteur.

**4 -** Capteur selon l'une quelconque des revendications 1 à 3, caractérisé en ce que la grille sélective (**4**) comprend des radicaux alkylsilanes ou halogénoalkylsilanes greffés sur les sites NH₂, de manière à constituer un capteur de référence à transistor à effet de champ pour la mesure du pH.

**5 -** Procédé de fabrication d'un capteur électrochimique solide et intégré, de mesure de pH, du genre constitué par un transistor à effet de champ, du type comprenant un substrat au silicium comportant :
- au moins une zone substrat (**1**), dopée **p** ou **n**,
- au moins une zone dopée **n** ou **p**, dénommée source (**2**),
- au moins une zone dopée **n** ou **p**, dénommée drain (**3**),
- et au moins une grille (**4**) sélective de l'ion H⁺,
la source, de drain et éventuellement la zone substrat étant chacun relié à au moins un plot de connexion (**7₁** à **7₃**), à un circuit d'alimentation et de mesure, par l'intermédiaire d'au moins une piste conductrice (**6**),
caractérisé en ce qu'il consiste, essentiellement, à :
- réaliser un substrat de forme générale allongée,
- ménager sur le substrat des plots de connexion (**7₁** à **7₃**) dans une zone d'extrémité (**Z**) opposée à celle (**Z'**) comprenant la source (**2**), le drain (**3**) et la grille (**4**),
- réaliser des pistes conductrices (**6**) entre les plots de connexion et les zones source et drain et, éventuellement, la zone substrat,
- revêtir le capteur ainsi obtenu, à l'exception des plots de connexion et de la grille d'une couche de protection,
- et, avant ou après la phase de revêtement, déposer sur la partie du substrat prévue pour former la grille sélective, une membrane d'oxynitrure et/ou de nitrure de silicium par dépôt chimique en phase vapeur.

**6 -** Procédé selon la revendication 5, caractérisé en ce que ce dépôt chimique en phase vapeur est assisté par plasma.

**7 -** Procédé selon l'une quelconque des revendications 5 et 6, caractérisé en ce qu'il comporte les étapes suivantes :
- chauffage du capteur à une température comprise entre 300 et 450° C, de préférence entre 350 et 400° C,
- mise sous vide au moins partiel de l'enceinte réactionnelle,
- amenée d'un plasma comprenant au moins trois gaz réactionnels, à savoir le silane (SiH₄), l'ammoniac (NH₃), le protoxyde d'azote (N₂O), dans l'enceinte réactionnelle,
- formation d'une membrane d'oxynitrure de silicium comprenant des sites SiNH₂ à sa surface.

**8 -** Procédé selon la revendication 5, caractérisé en ce que ce dépôt chimique en phase vapeur est assisté par irradiation d'ultra-violets.

**9 -** Procédé selon la revendication 8, caractérisé en ce qu'il comporte les étapes suivantes :
- chauffage du capteur dans l'enceinte réactionnelle à une température comprise entre 100 et 300°C, de préférence entre 150 et 250° C et, plus préférentiellement encore, de l'ordre de 200° C,
- mise sous un vide, au moins partiel, de préférence compris entre 5 et 10 mbar et, plus préférentiellement encore, de l'ordre de 7 mbar, de l'enceinte réactionnelle,
- amenée dans cette dernière d'un mélange gazeux contenant au moins deux gaz réactionnels : le silane (SiH₄) et l'ammoniac (NH₃) selon un rapport R₃ (SiH₄/NH₃),
- irradiation du mélange gazeux aux ultra-violets,
- et formation d'une membrane de nitrure de silicium comprenant des sites SiNH₂ à sa surface.

**10 -** Procédé selon l'une quelconque des revendications 7 et 9, caractérisé en ce que les ratios de débit gazeux R₁ = N₂O/(N₂O + NH₃) et R₂ = (N₂O + NH₃)/SiH₄, le ratio atomique 0/(0 + N), ainsi que R₃ sont choisis de manière à ce que la densité surfacique de sites SiNH₂ soit comprise entre 2 et 8, de préférence entre 3 et 5 et, plus préférentiellement encore, soit de l'ordre de 4 micromoles x m⁻².

**11 -** Procédé selon l'une quelconque des revendications 6 à 10, caractérisé en ce qu'il comprend une étape supplémentaire de greffage de radicaux alkylsilanes sur les sites (**NH₂**) de la membrane d'oxynitrure de silicium et/ou de nitrure de silicium.
